# FASCICULE DE BREVET EUROPEEN

(11) **EP 3 215 794 B1**
(45) Date de publication et mention de la délivrance du brevet: **03.07.2024**
(21) Numéro de dépôt: 15801897.8
(22) Date de dépôt: 06.11.2015
(51) Int. Cl.: F24F 3/14, F24F 3/16, F28C 3/06, B01D 53/18, B01D 53/26, F24H 1/10, F24F 8/133, F28C 3/08

(54) **DISPOSITIF DE PRODUCTION ET DE TRAITEMENT D'UN FLUX GAZEUX À TRAVERS UN VOLUME DE LIQUIDE, INSTALLATION ET PROCÉDÉ METTANT EN OEUVRE CE DISPOSITIF**
VORRICHTUNG ZUR HERSTELLUNG UND VERARBEITUNG EINES GASSTROMS DURCH EIN FLÜSSIGKEITSVOLUMEN UND ANLAGEN UND VERFAHREN MIT ANWENDUNG DER BESAGTEN VORRICHTUNG
DEVICE FOR PRODUCING AND TREATING A GAS STREAM THROUGH A VOLUME OF LIQUID, AND FACILITIES AND METHODS IMPLEMENTING SAID DEVICE

(30) Priorité: 06.11.2014 FR 1460748; 06.11.2014 FR 1460750
(43) Date de publication de la demande: 13.09.2017
(73) Titulaire: Starklab, 59310 Nomain (FR)
(72) Inventeur: ZEMMOURI, Jaouad, 59310 Nomain (FR)
(74) Mandataire: Matkowska, Franck
(86) Numéro de dépôt international: PCT/FR2015/053001
(87) Numéro de publication internationale: WO 2016/071648

(56) Documents cités:
- CH-A- 375 472
- CH-A- 375 472
- US-A- 2 896 927
- US-A- 2 896 927
- US-A- 5 908 491
- US-A- 5 908 491
- US-A1- 2010 325 956
- US-A1- 2010 325 956

## Description

### Domaine technique

La présente invention concerne la production et le traitement d'un flux d'air à travers un volume de liquide. Elle trouve son application dans des domaines variés tels que par exemple, et de manière non exhaustive, la récupération de calories dans un flux gazeux, et notamment dans un flux d'air chaud ou dans des fumées industrielles, la production d'un flux gazeux qui est chauffé ou refroidi en traversant ledit volume de liquide, la production d'un flux gazeux dont la température est contrôlée et/ou dont l'humidité absolue est contrôlée, l'humidification ou la déshumidification d'un flux gazeux, la dépollution ou le filtrage d'un flux gazeux, le chauffage ou la climatisation d'un local ou de bâtiments industriels, tertiaires, ou domestiques, le contrôle de l'hygrométrie d'un local ou de bâtiments industriels, tertiaires, ou domestiques. Le flux gazeux produit peut également être utilisé pour refroidir, chauffer, humidifier ou déshumidifier tout type d'objet ou de surface.

### Art antérieur

L'utilisation d'un liquide, tel que par exemple de l'eau, pour traiter, et notamment pour chauffer ou refroidir un flux gazeux par échange thermique entre le liquide et le flux gazeux, avec une mise en contact direct du flux gazeux et du liquide, est une technique ancienne, qui présente l'avantage d'être écologique, car elle évite notamment la mise en oeuvre de fluides caloporteurs de type fluides frigorigènes. Le chauffage ou refroidissement du flux gazeux, et notamment d'un flux d'air peut par exemple avoir pour objectif de produire un flux gazeux ayant une température contrôlée et/ou avoir pour objectif de produire un flux gazeux ayant une humidité absolue contrôlée.

Une première solution connue pour mettre en oeuvre cette technique consiste à faire passer le flux gazeux à travers un rideau de fines gouttelettes du liquide ou à travers une surface d'échange perméable au gaz et contenant ce liquide, tel que par exemple un matériau textile imbibé d'eau ou à faire circuler le flux gazeux au contact de plaques humidifiées. Le principal inconvénient de ce type de solution réside dans le très faible rendement énergétique de l'échange thermique entre le liquide et le flux gazeux, et dans les faibles débits d'air pouvant être obtenus.

Une deuxième solution connue consiste à faire passer le flux gazeux, et notamment le flux d'air directement à travers un volume de liquide contenu dans une enceinte, en injectant le flux gazeux dans le volume de liquide, au-dessous de la surface dudit volume de liquide. Ce type de solution est décrit par exemple dans le brevet américain US 2 896 927, dans la demande de brevet internationale WO 2006/138287, dans le brevet américain US 4 697 735 (figure 3), et dans la demande de brevet allemand DE 101 53 452. Cette deuxième solution technique présente l'avantage de permettre d'atteindre un rendement énergétique des échanges thermiques entre le liquide et le flux gazeux plus élevé que la première solution technique. Néanmoins les solutions décrites dans ces publications ne permettent de travailler avec des débits de gaz importants, et ne permettent pas de traiter rapidement des volumes de gaz importants, et le rendement énergétique des échanges thermiques entre le liquide et le flux gazeux restent faibles. Plus particulièrement les solutions décrites dans ces publications ne sont par exemple pas adaptées pour refroidir efficacement et rapidement des flux gazeux à haute température, tels que par exemple des fumées industrielles, ou pour récupérer efficacement et rapidement des calories dans un flux gazeux.

On a également proposé dans le brevet Américain US 5 908 491 un dispositif permettant de nettoyer l'air en le faisant passer dans un volume d'eau de manière à filtrer les poussières contenues dans l'air. Ce dispositif comporte une enceinte fermée, qui contient ledit volume d'eau, et qui est mise en dépression de manière à aspirer de l'air à l'extérieur et à créer par aspiration un flux d'air passant à travers le volume d'eau contenu dans l'enceinte. Cette solution ne permet pas de travailler avec des débits d'air importants. De plus, elle n'est pas utilisée, et n'est d'ailleurs pas adaptée, pour réaliser de manière efficace un transfert de calorie entre le flux d'air et le volume d'eau avec des débits d'air importants.

### Objectif de l'invention

Un objectif de l'invention est de proposer une nouvelle solution technique qui permet d'améliorer la production et le traitement d'un flux gazeux à travers un volume de liquide contenu dans une enceinte, et notamment qui permet de traiter efficacement un flux gazeux avec des débits importants.

### Résumé de l'invention

L'invention a ainsi pour premier objet un dispositif de production et de traitement d'un flux gazeux défini dans la revendication 1.

L'invention a pour autre objet une installation permettant la récupération de calories dans un flux gazeux entrant, ladite installation comportant le dispositif selon l'une des revendications 1 à 9, dans lequel la température du liquide est inférieure à la température du flux gazeux entrant dans l'enceinte et un système de récupération d'énergie permettant de récupérer une partie au moins des calories captées dans le liquide de la réserve dudit dispositif.

L'invention a également pour objet une installation comportant au moins deux installations amont et aval de récupération de calories dans un flux gazeux qui sont conformes à l'une des revendications 10 et 11, et qui sont montées en cascade, de telle sorte que le flux gazeux sortant du dispositif de l'installation amont est au moins en partie, et de préférence dans sa totalité, utilisé comme flux gazeux entrant du dispositif de l'installation aval.

L'invention a pour autre objet un procédé de chauffage et/ou de refroidissement et/ou d'humidification et/ou de déshumidification d'un local, au moyen d'au moins un dispositif selon l'une des revendications 1 à 9, et qui est agencé de telle sorte que le flux gazeux entrant qui est introduit dans l'enceinte du dispositif est un flux d'air, et le flux d'air sortant du dispositif est introduit à l'intérieur du local.

L'invention a pour autre objet un procédé de production d'un flux gazeux, et notamment d'un flux d'air, à partir d'un flux gazeux entrant, et notamment d'un flux d'air entrant, dans lequel on utilise une installation selon l'une des revendications 10 à 12, et on utilise pour le chauffage une partie au moins des calories captées dans la réserve de liquide.

L'invention a pour autre objet un procédé de récupération de calories dans l'air d'un local ou de déshumidification d'un local avec récupération de calories, au moyen d'une installation selon l'une des revendications 10 à 12, dans lequel le flux gazeux entrant qui est introduit dans l'enceinte du dispositif de l'installation est un flux d'air provenant au moins en partie de l'intérieur du local.

L'invention a pour autre objet un procédé de création d'une zone tampon à l'intérieur d'un local dans laquelle l'humidité et/ou la teneur en poussières est contrôlée, caractérisé en ce qu'on utilise un dispositif selon l'une des revendications 1 à 9, qui est agencé de telle sorte que le flux de gaz entrant dans l'enceinte du dispositif est un flux d'air provenant au moins en partie de l'extérieur du local, et dans lequel le flux d'air sortant de l'enceinte du dispositif est introduit au moins en partie dans le local.

L'invention a pour autre objet un procédé de filtrage et/ou dépollution d'un flux gazeux, et notamment d'un flux d'air, au moyen d'au moins un dispositif selon l'une des revendications 1 à 9, d'une installation selon l'une des revendications 10 à 12, de telle sorte qu'un flux gazeux entrant contenant des particules et/ou des polluants est introduit dans l'enceinte du dispositif et qu'une partie au moins de ces particules et/ou polluants est captée dans le liquide de la réserve du dispositif.

Plus particulièrement, le flux gazeux entrant contient des fumées industrielles, et notamment des fumées industrielles à haute température. Plus généralement, l'invention a pour objectif de proposer une nouvelle solution technique permettant de récupérer efficacement des calories dans un flux gazeux et en mettant en oeuvre des débits de flux gazeux importants.

### Brève description des figures

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- La figure 1 représente de manière schématique une première variante de réalisation d'un dispositif de l'invention permettant la production et le traitement d'un flux gazeux à travers un volume de liquide.
- La figure 2 représente de manière schématique une deuxième variante de réalisation d'un dispositif de l'invention permettant la production et le traitement d'un flux gazeux à travers un volume de liquide.
- La figure 3 représente de manière schématique une troisième variante de réalisation d'une partie d'un dispositif de l'invention permettant la production et le traitement d'un flux gazeux à travers un volume de liquide.
- La figure 4 représente de manière schématique une quatrième variante de réalisation d'une partie d'un dispositif de l'invention permettant la production et le traitement d'un flux gazeux à travers un volume de liquide.
- La figure 5 représente de manière schématique une première variante d'une installation mettant en oeuvre le dispositif de la figure 1, et permettant de récupérer des calories dans un flux gazeux.
- La figure 6 représente de manière schématique une deuxième variante d'une installation mettant en oeuvre le dispositif de la figure 1, et permettant de récupérer des calories dans un flux gazeux.
- La figure 7 représente de manière schématique une troisième variante d'une installation mettant en oeuvre le dispositif de la figure 1, et permettant de récupérer des calories dans un flux gazeux.
- La figure 8 représente de manière schématique une quatrième variante d'une installation mettant en oeuvre deux dispositifs de la figure 1 en cascade, et permettant de récupérer des calories dans un flux gazeux.
- La figure 9 représente de manière schématique une cinquième variante d'une installation mettant en oeuvre le dispositif de la figure 1, et permettant de récupérer des calories dans un flux gazeux.
- La figure 10 représente de manière schématique une variante d'une installation mettant en oeuvre le dispositif de la figure 1, et permettant de créer une zone tampon dont l'humidité ou la teneur en poussières est contrôlée.

### Description détaillée

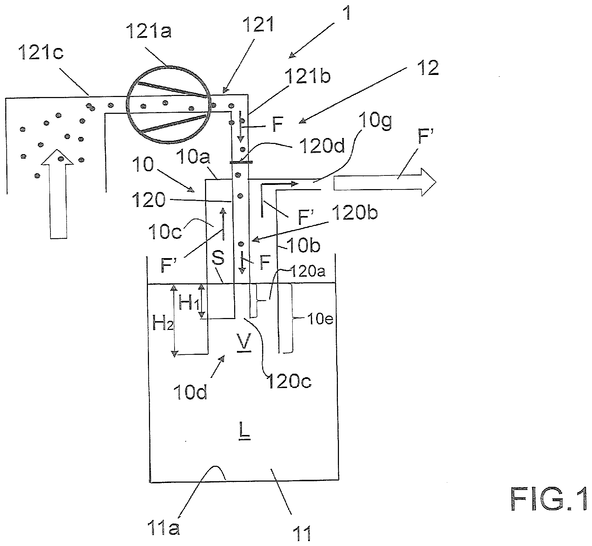

En référence à la variante particulière de réalisation de la figure 1, le dispositif 1 de production et de traitement d'un flux gazeux comporte une enceinte 10, une réserve 11 de liquide L ouverte en partie supérieure, et par exemple une réserve d'eau, et des moyens 12 de production et d'injection d'un flux gazeux F entrant dans un volume V de liquide contenu dans l'enceinte 10.

L'invention n'est pas limitée à la mise en oeuvre d'eau comme liquide L, mais s'étend à tout autre type de liquide. A titre d'exemples non limitatifs et non exhaustifs, il peut être intéressant d'utiliser un liquide L dont la température de solidification à la pression atmosphérique est inférieure à 0°C, tel que par exemple de l'eau contenant des additifs, de type sels, glucides, glycol. Il peut également être intéressant d'utiliser de l'huile comme liquide L.

L'enceinte 10 comprend une paroi supérieure 10a et une paroi latérale 10b délimitant une chambre interne 10c, et comporte à son extrémité inférieure une ouverture d'admission de liquide 10d, de grande section. Dans une autre variante, cette ouverture 10d de grande section pourrait être remplacée par plusieurs ouvertures d'admission de liquide de plus petite section.

La partie inférieure 10e de l'enceinte 10 est plongée dans le volume de liquide L contenu dans la réserve 11, sans toucher le fond 11a de la réserve de liquide 11.

L'ouverture d'admission de liquide 10d permet de faire communiquer la partie inférieure 10e de l'enceinte 10 avec la réserve de liquide 11, de telle sorte que la partie inférieure immergée 10e de l'enceinte contient une partie de ce liquide L, sous la forme d'un volume V de liquide.

L'enceinte 10 comprend également au moins une ouverture d'évacuation 10g d'un flux gazeux, qui est positionnée au-dessus de la surface S du volume V de liquide contenu dans l'enceinte 10, et qui dans l'exemple illustré est ménagée à proximité de la paroi supérieure 10a de l'enceinte 10.

Les moyens 12 de production et d'injection d'un flux gazeux F comportent au moins un conduit d'injection 120, dont une partie inférieure 120a est plongée dans le volume V de liquide contenu dans la partie inférieure immergée 10e de l'enceinte 10, et se prolonge en partie supérieure à l'intérieur de l'enceinte 10 en dehors dudit volume V de liquide.

Dans cet exemple particulier, ce conduit d'injection 120 est constitué par un tube rectiligne vertical, qui traverse la paroi supérieure 10a de l'enceinte 10, et qui est ouvert à ses deux extrémités supérieure et inférieure.

Ce conduit d'injection 120 comporte ainsi dans sa partie inférieure immergée 120a au moins une ouverture d'évacuation 120c positionnée au-dessous de la surface S dudit volume V de liquide, et au-dessus du niveau de l'ouverture d'admission de liquide 10d de la partie inférieure immergée 10e de l'enceinte 10.

La profondeur d'immersion H1 du conduit d'injection 120 dans le liquide, c'est-à-dire la distance H1 entre l'ouverture 120c et la surface S du volume V de liquide, est inférieure à la profondeur d'immersion H2 de l'enceinte dans la réserve 11 de liquide, c'est-à-dire la hauteur H2 du volume V de liquide dans l'enceinte 10.

Les moyens 12 de production et d'injection d'un flux gazeux F comportent en outre des moyens aérauliques 121, qui en fonctionnement permettent de créer et d'introduire un flux gazeux F entrant, en provenance de l'extérieur de l'enceinte 10, dans la partie supérieure non immergée 120b du conduit d'injection. Dans la variante particulière de la figure 1, ces moyens aérauliques 121 comportent plus particulièrement un compresseur de gaz 121a, dont la sortie est raccordée à l'ouverture d'admission 120d supérieure du conduit d'injection 120 par une canalisation 121b, et dont l'entrée est raccordée à une tubulure d'admission 121c communiquant avec l'extérieur de l'enceinte 10. Ce compresseur 121a permet de créer par aspiration un flux gazeux F, et d'introduire ce flux gazeux F sous pression dans le conduit d'injection 120 à travers l'ouverture d'amission 120d supérieure du conduit d'injection 120.

Le compresseur 121a peut être tout type connu de compresseur de gaz permettant de créer un flux gazeux (ventilateur centrifuge, ventilateur axial, pompe, ...).

L'invention permet de travailler avec un débit de gaz en sortie du compresseur 121a qui est important, à savoir supérieur à 1000m³/h, et plus particulièrement encore dans certaines applications supérieur à 10000m³/h.

Lorsque le compresseur 121a fonctionne, le flux gazeux F créé par le compresseur 121a est introduit sous pression dans le conduit d'injection 120 par l'ouverture d'admission 120d supérieure de ce conduit, passe à travers l'ouverture d'évacuation 120c de la partie inférieure immergée du conduit d'injection 120, et est introduit dans ledit volume V de liquide contenu dans la partie inférieure immergée 10e de l'enceinte 10, au-dessous de la surface S dudit volume V de liquide, sans modifier la pression extérieure au-dessus du liquide L de la réserve 11 à l'extérieur de l'enceinte 10. Ainsi, dans le cas particulier illustré, lorsque le compresseur 121a fonctionne, la pression extérieure au-dessus du liquide L de la réserve 11 à l'extérieur de l'enceinte 10 n'est pas modifiée et reste égale à la pression atmosphérique.

Plus particulièrement le flux gazeux F est introduit dans ledit volume de liquide V en étant dirigé vers le bas.

Le compresseur 121a est sélectionné de manière à créer un flux gazeux F avec une pression dans le conduit d'injection 120, au-dessus du liquide, qui est supérieure à la colonne de liquide H1 dans la partie immergée 120a du conduit d'injection 120, de sorte que le gaz puisse être évacué dans le volume V de liquide en dehors du conduit d'injection 120.

Le gaz qui est introduit dans le volume de liquide V passe à travers le volume V de liquide en remontant vers la surface S dudit volume de liquide V, sous l'effet de la vitesse du gaz et de la poussée d'Archimède, et ressort à l'intérieur de l'enceinte 10 et à l'extérieur du conduit d'injection 120 en formant un flux gazeux F' sortant, qui a été traité par contact direct avec ledit volume V de liquide. Ce flux gazeux F' sortant remonte à l'intérieur de l'enceinte 10, en dehors du conduit d'injection 120, et est évacué en dehors de ladite enceinte 10 en passant à travers l'ouverture d'évacuation 10g de l'enceinte 10.

Plus particulièrement, les profondeurs d'immersion H1 et H2 sont dimensionnées, notamment par rapport à la pression du gaz dans le conduit d'injection 120 au-dessus du liquide, de telle sorte que tout le gaz, qui est introduit dans le volume V de liquide contenu dans la partie inférieure immergée 10e de l'enceinte 10, remonte dans le volume de liquide V et ressort dans l'enceinte 10 au-dessus du liquide et en dehors du conduit d'injection 120, sans qu'une partie de ce gaz ne passe par l'ouverture d'admission inférieure 10d de l'enceinte 10, dans le volume de liquide situé en dehors de l'enceinte 10. Lorsque la température du volume de liquide V dans l'enceinte 10 est différente de la température du flux gazeux F avant son introduction dans le volume V de liquide, il se produit entre le gaz et le liquide des échanges thermiques par chaleur sensible et chaleur latente.

Lorsque la température T_{Liquide} du volume de liquide est inférieure à la température initiale T_{Initiale} du flux de gaz F avant introduction dans le volume de liquide, le flux de gaz F' est refroidi. Plus particulièrement, la température du flux de gaz F' sortant est sensiblement égale à la température T_{Liquide} du volume de liquide. Il en résulte concomitamment que le flux d'air de gaz F' sortant du dispositif 1 a été déshumidifié par rapport aux flux de gaz entrant F, l'humidité absolue (poids d'eau par volume d'air) dans le flux de gaz F' sortant étant inférieure à l'humidité absolue du flux de gaz F entrant.

A l'inverse, lorsque la température du T_{Liquide} du volume de liquide est supérieure à la température initiale T_{Initiale} , le flux de gaz F' sortant est chauffé. Il en résulte concomitamment que le flux de gaz F' sortant du dispositif 1 a été humidifié par rapport au flux de gaz entrant F, l'humidité absolue (poids d'eau par volume d'air) dans le flux de gaz F' sortant étant supérieure à l'humidité absolue du flux de gaz F entrant.

La profondeur d'immersion H1 du conduit d'injection 120 doit être suffisamment importante pour que le traitement du flux de gaz par passage à travers le volume de liquide V, et plus particulièrement pour que le cas échéant le transfert thermique entre le liquide et le gaz injecté dans le volume de liquide V, soit efficace et suffisant, et permette le cas échéant au flux de gaz F' refroidi ou chauffé par le liquide d'être à une température proche et de préférence sensiblement identique à celle du liquide. A l'inverse, cette profondeur d'immersion H1 ne doit pas être trop importante pour éviter un surdimensionnement du compresseur 121a. Selon l'invention, la profondeur H1 est ainsi comprise entre 20mm et 200mm, et est de préférence comprise entre 30mm et 50mm.

De même pour une meilleure efficacité, la hauteur H2 du volume V de liquide doit de préférence ne pas être trop importante, et sera préférentiellement inférieure à 500mm, et plus particulièrement comprise entre 40mm et 500mm. L'invention n'est toutefois fois pas limitée à ces valeurs particulières.

Dans une autre application, le dispositif 1 de l'invention peut être utilisé pour filtrer ou dépolluer le flux de gaz entrant F par passage à travers un volume de liquide V. Dans cette application, la température du volume de liquide peut être supérieure ou inférieure à la température du flux de gaz entrant F, ou être sensiblement égale à la température du flux de gaz entrant F. Lorsque la température du volume de liquide est sensiblement égale à la température du flux de gaz entrant F, on produit en sortie du dispositif 1 un flux de gaz sortant F' filtré ou dépollué, qui n'a pas été chauffé ou refroidi, mais qui est sensiblement à la même température que le flux de gaz entrant F.

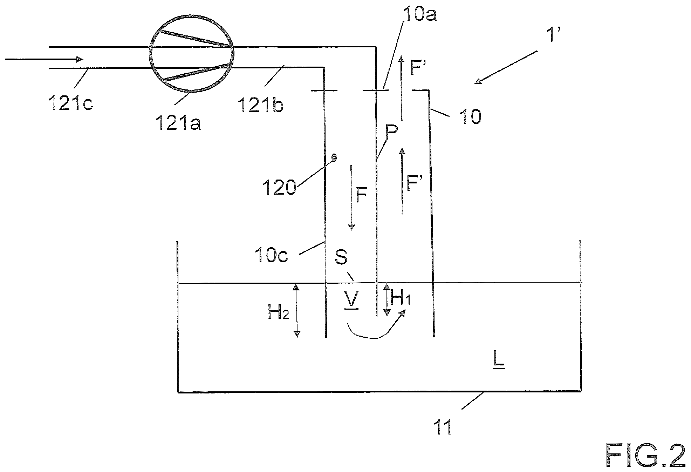

On a représenté sur la figure 2, une autre variante de réalisation d'un dispositif 1' de l'invention dans laquelle le conduit d'injection 120 est délimité entre une paroi verticale P interne à l'enceinte 10 et par une partie de la paroi latérale 10c de l'enceinte 10.

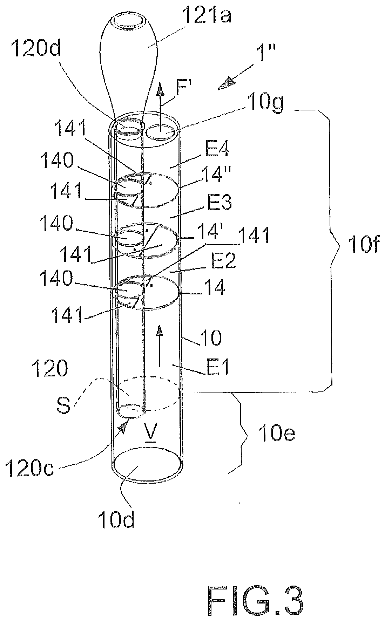

On a représenté sur la figure 3, une autre variante de réalisation d'un dispositif 1" de l'invention, seuls l'enceinte 10 et le compresseur 121a étant représentés sur cette figure, la réserve de liquide 11 n'étant pas représentée. Dans cette variante la paroi latérale 10c de l'enceinte 10 est de forme tubulaire, mais pourrait dans le cadre de l'invention avoir une toute autre géométrie.

Dans cette variante de la figure 3, l'enceinte 10 comporte dans sa partie supérieure 10f qui n'est pas destinée être immergée dans un liquide, plusieurs plaques 14, 14', 14" à fonction de chicanes. Ces plaques 14, 14', 14" sont fixées à l'intérieur de l'enceinte 10, l'une au-dessus de l'autre, avec un espace entre plaques 14, de manière à former plusieurs chambres superposées E1, E2, E3 et E4. Chaque plaque 14, 14', 14" est en contact étanche sur toute sa périphérie avec la paroi latérale 10c de l'enceinte 10. En fonctionnement, lorsque la partie inférieure de l'enceinte est immergée dans une réserve de liquide, la première chambre E1 est délimitée par la surface du volume de liquide V contenu à l'intérieur de l'enceinte et la plaque inférieure 14. La deuxième chambre E2 est délimitée par la plaque inférieure 14 et la plaque intermédiaire 14'. La troisième chambre E3 est délimitée par la plaque intermédiaire 14' et la plaque supérieure 14". La quatrième chambre E4 est délimitée par la plaque supérieure 14" et la paroi supérieure 10a de l'enceinte 10.

Le nombre de plaques 14, 14', 14" et de chambres E1, E2, E3 et E4 ne sont pas limitatifs de l'invention, le dispositif 1 pouvant comporter une seule plaque 14 délimitant deux chambres ou plus de trois plaques délimitant plus de quatre chambres.

Chaque plaque 14, 14, 14" comporte une ouverture traversante 140 ayant sensiblement la même section que le conduit d'injection 120. Ces ouvertures traversantes 140 sont alignées verticalement, et le conduit d'injection 120 est passé à travers ces ouvertures 140, le conduit 120 étant en contact étanche sur toute sa périphérie extérieure avec chaque plaque 14, 14', 14" au niveau de chaque ouverture 140 de passage du tube.

Chaque plaque 14, 14', 14" comporte également au moins une ouverture traversante 141 permettant de faire communiquer entre elles deux chambres voisines, et permettant ainsi le passage d'un flux gazeux F' sortant du volume de liquide V d'une chambre à l'autre depuis la chambre inférieure E1 jusqu'à l'ouverture d'évacuation 101.

Ces ouvertures 141 sont décalées verticalement les unes par rapport aux autres et ne sont pas alignées avec l'ouverture d'évacuation d'air 101 de l'enceinte 10, de manière à faire subir plusieurs changements de direction audit flux d'air F'.

En fonctionnement, la partie inférieure 10e de l'enceinte 10 étant immergée dans une réserve 11 de liquide, le flux d'air F' sortant du volume de liquide V remonte à l'intérieur de l'enceinte 10 en circulant à travers les chicanes 14,14',14", et en subissant plusieurs changements de directions successifs, puis est évacué en dehors de l'enceinte 10 à travers l'ouverture d'évacuation 10g.

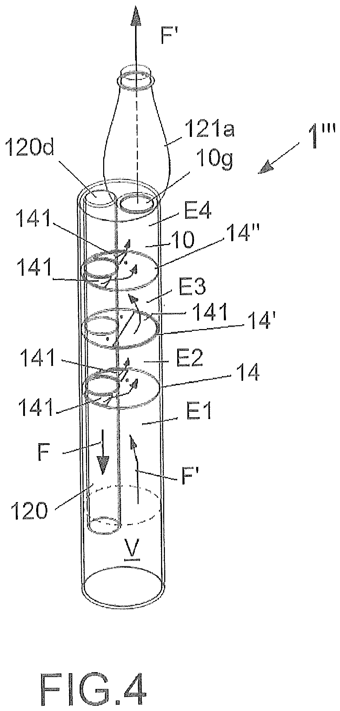

On a représenté sur la figure 4, une autre variante qui se différencie de celle de la figure 3 en ce que le compresseur d'air 121a est raccordé à l'ouverture d'évacuation d'air 10g de l'enceinte 10, et crée le flux de gaz F entrant par aspiration à travers l'ouverture d'admission 120d du conduit d'injection 120, et non plus par soufflage.

Dans les deux variantes des figures 3 et 4, lorsqu'il se produit dans le volume de liquide V des turbulences qui peuvent être importantes, et qui sont susceptibles de provoquer des projections de gouttes de liquides, qui sont entraînées par le flux de gaz sortant F', les chicanes 14, 14', 14" forment un obstacle sur le parcours de ces gouttes et permettent, grâce aux changements de direction successifs de l'air imposés par les chicanes, d'éviter que du liquide ne soit projeté par l'ouverture d'évacuation 10g en dehors de l'enceinte en même temps le flux d'air F' sortant. Grâce aux chicanes 14, 14', 14', aucune goutte de liquide n'est projetée en dehors de l'enceinte. Il en résulte avantageusement que les débits des flux d'air F et F' peuvent être très importants et/ou que le volume de l'enceinte peut être faible, ce qui réduit l'encombrement du dispositif, tout en évitant la projection de gouttes de liquide en dehors de l'enceinte du dispositif.

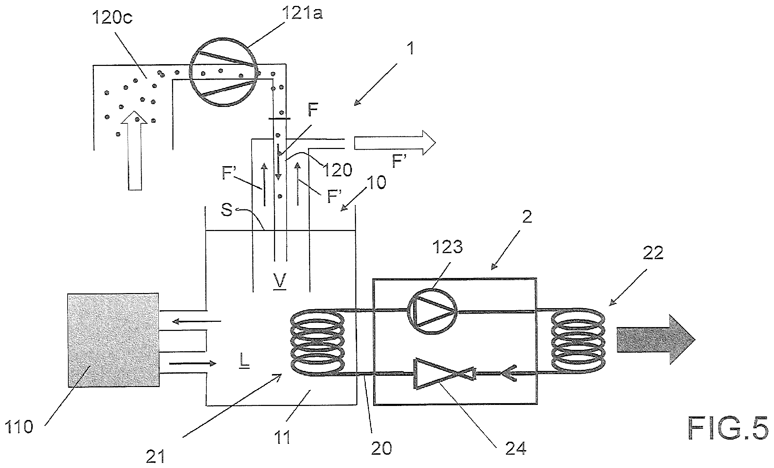

On a représenté sur la figure 5, une installation pour la récupération de calories dans un flux gazeux F, qui met en oeuvre le dispositif 1 de la figure 1. Bien entendu, il est également possible pour réaliser cette installation d'utiliser les dispositifs des figures 2 à 4.

Dans cette installation de la figure 5, la réserve 11 de liquide L est par exemple une réserve d'eau, et est équipée de manière optionnelle d'une unité de traitement de l'eau 110 qui permet par exemple de maintenir le pH de l'eau à une valeur contrôlée, et par exemple un pH neutre et/ou de filtrer l'eau L pour retirer les impuretés ou polluants. L'installation est en outre équipée d'un système 2, de type pompe à chaleur, qui permet la récupération d'une partie des calories du liquide L de la réserve 11.

Ce système 2 de récupération des calories comporte plus particulièrement un fluide caloporteur circulant dans un circuit fermé 20. Ledit circuit fermé 20 comprend un évaporateur 21 plongé dans le liquide L de la réserve 11, un condenseur 22 positionné à l'extérieur de la réserve 11 de liquide, un compresseur 23 interposé entre la sortie de l'évaporateur 21 et l'entrée du condenseur 22, un détendeur 24 interposé entre la sortie du condenseur 22 et l'entrée de l'évaporateur 21.

En fonctionnement, un flux gazeux F chaud et/ou humide est créé par le compresseur 121a par aspiration à travers la tubulure d'admission 120c. Ce flux gazeux F est créé par aspiration par exemple à partir de l'air environnant à l'intérieur ou à l'extérieur d'un bâtiment, ou de manière à capter des fumées chaudes et/ou humides produites par une cheminée ou un appareil, et notamment par une cheminée industrielle.

La température T_{liquide} du liquide L, et par exemple de l'eau, dans la réserve 11 est inférieure à la température initiale du flux de gaz F. Lors de son passage dans le volume de liquide V contenu dans l'enceinte 10 du dispositif, le gaz est refroidi et déshumidifié, le gaz F' sortant du dispositif 1 étant à une température inférieure à celle du flux de gaz entrant F et l'humidité absolue (poids d'eau par volume d'air) dans le flux de gaz F' sortant étant inférieure à l'humidité absolue du flux de gaz F entrant. Ce flux gazeux sortant F' est par exemple redirigé vers l'extérieur d'un bâtiment ou vers une zone (intérieure ou extérieure) où l'on a besoin de froid et de moins d'humidité.

Lors de son passage dans le volume de liquide V, le gaz cède des calories au volume de liquide V, grâce d'une part à la chaleur sensible liée à l'écart de température du gaz F et du liquide 11, et d'autre part à la chaleur latente liée à la vapeur d'eau qui est contenue dans le gaz F et qui se condense dans le liquide 11. Plus la différence de température entre le liquide 11 et le flux de gaz F entrant est importante, et plus on récupère de calories dans le liquide 11. Ces calories sont captées par et se répartissent dans la réserve 11 de liquide de plus grand volume. L'augmentation de température du liquide L de la réserve 11 qui en résulte permet de chauffer le fluide caloporteur qui circule à l'état de vapeur dans l'évaporateur 21. Tout ou partie des calories apportées au liquide L de la réserve 11 par le flux gazeux entrant F sont donc récupérées par chauffage du fluide caloporteur dans l'évaporateur 21, ce qui contribue à abaisser la température de la réserve 11 de liquide, et sont transférées jusqu' au condenseur 22 au niveau duquel le fluide caloporteur se condense à l'état liquide et restitue de la chaleur.

Lorsque le flux gazeux F contient des polluants solubles dans le liquide de la réserve 11 ou des particules (par exemple flux gazeux F formé à partir de fumées industrielles polluantes), la réserve 11 de liquide L permet avantageusement de capter au moins une partie de ces polluants ou particules, et de produire un flux sortant F' plus propre.

L'installation de la figure 5 peut plus particulièrement être utilisée pour traiter des fumées industrielles haute température (par exemple à 1000°C) en les refroidissant en dessous de 100°C, et en les dépolluant, et en récupérant une partie importante des calories de ces fumées industrielles via la réserve 11 de liquide et le système de récupération énergie 2.

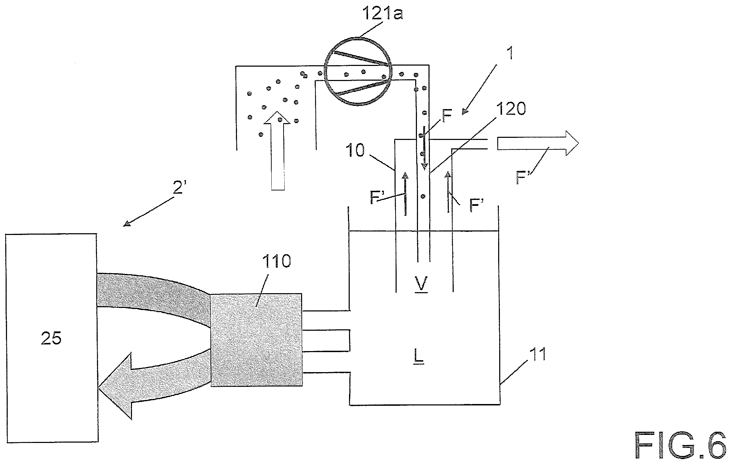

On a représenté sur la figure 6 une installation de récupération d'énergie, qui se différencie de la figure 5, en ce que système de récupération d'énergie 2' utilise directement le liquide L de la réserve 11 comme liquide caloporteur, et permet d'alimenter en boucle fermée un réservoir 25 de stockage d'énergie (par exemple une réserve de liquide supplémentaire) ou un dispositif 25 (par exemple pompe à chaleur ou équivalent) permettant de récupérer par échange thermique les calories stockées dans le liquide 11. Le système de récupération d'énergie 2' comporte ainsi un circuit fermé dans lequel circule une partie du liquide L de la réserve à fonction de fluide caloporteur.

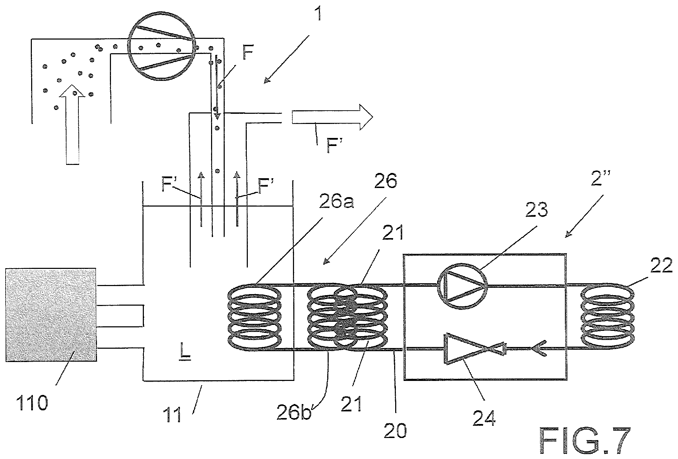

On a représenté sur la figure 7 une installation de récupération d'énergie, qui se différencie de la figure 5 par la mise en oeuvre dans le système de récupération d'énergie 2" d'un échangeur intermédiaire 26 dans lequel circule en boucle fermée un fluide caloporteur. Une partie 26a de l'échangeur intermédiaire 26 est plongée dans le liquide 11, et une partie 26b est située en dehors du liquide L et permet un transfert thermique avec le fluide caloporteur dans l'évaporateur 21 à l'extérieur de la réserve 11 de liquide L.

### Exemples d'applications non limitatifs de l'invention des installations des figures 5 à 7

### Exemple 1 : Recyclage vers l'extérieur de l'air vicié à l'intérieur d'une habitation ou d'un local avec récupération d'énergie

L'air à l'intérieur de l'habitation ou du local contient environ 60% d'humidité relative et est à une température d'environ 20°C. La réserve 11 contient de l'eau à une température d'environ 3°C. L'énergie récupérée dans l'eau par m³ d'air est :
Chaleur sensible : environ 20KJ/m³
Chaleur latente : environ 10KJ/m³

### Exemple 2 : Récupération d'énergie dans de l'air contenant environ 80% d'humidité relative et à une température d'environ 50°C.

La réserve 11 contient de l'eau à une température d'environ 6°C. L'énergie récupérée dans l'eau par m³ d'air est :
Chaleur sensible : environ 54KJ/m³
Chaleur latente : environ 152KJ/m³

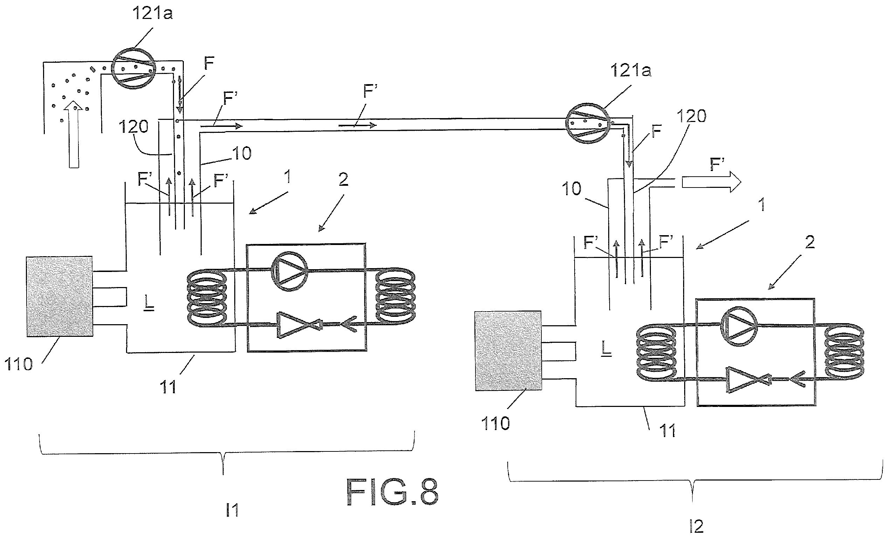

On a représenté sur la figure 8 une installation multi-étages qui comporte deux installation 11, 12 qui sont similaires à l'installation de la figure 5 et qui sont montées en cascade, le flux gazeux F' sortant de l'installation amont 11 étant utilisé comme flux gazeux entrant F de l'installation aval 12.

Cette installation multi-étages de la figure 8 est particulièrement adaptée pour refroidir et récupérer de l'énergie en plusieurs étapes successives dans des flux gazeux haute température, comme par exemple des fumées industrielles.

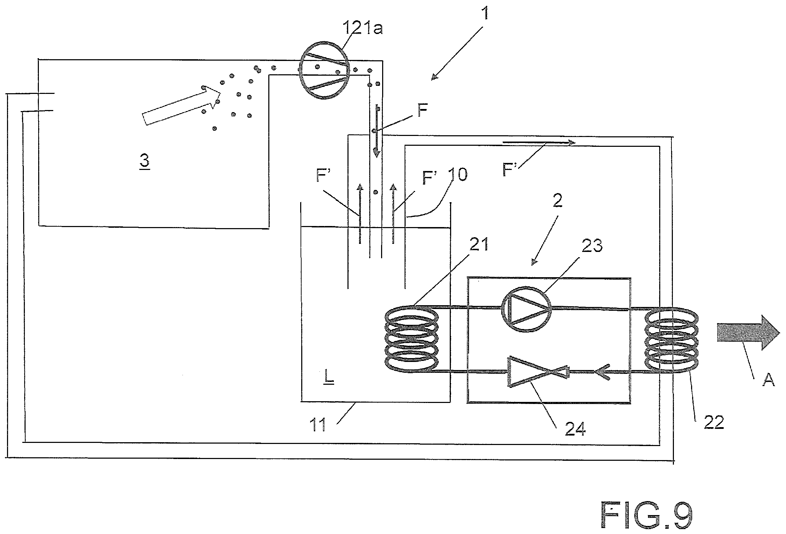

On a représenté sur la figure 9, une installation de récupération d'énergie et le cas échéant de déshumidification de l'air à l'intérieur d'un local ou d'une habitation 3, qui fonctionne en circuit fermé, le flux d'air sortant F' refroidi, et le cas échéant déshumidifié, étant réinjecté dans ledit local 3. Dans cette installation, l'air qui est réintroduit dans le local est préalablement réchauffé par échange thermique avec le condenseur 22 du système de récupération d'énergie 2. Une autre partie de l'énergie transférée au condenseur 22 peut être récupérée par ailleurs (flèche A).

De manière non exhaustive et non limitative, le local 3 peut par exemple être une piscine couverte. Le local 3 peut également être tout type de local contenant des hommes ou des animaux, l'installation permettant ainsi la récupération d'énergie des activités humaines ou animales.

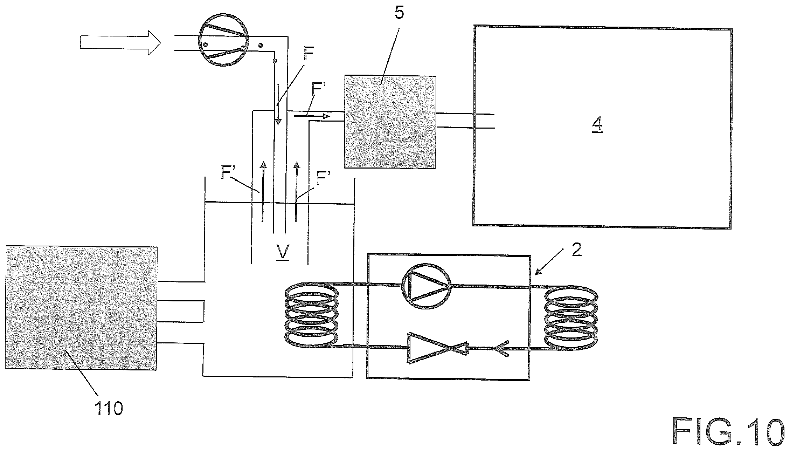

On a représenté sur la figure 10, une installation de récupération d'énergie qui permet de créer une zone intérieure tampon 4, dans laquelle l'humidité ou la concentration de poussières dans l'air est contrôlée. Dans cette installation, le flux d'air sortant F' qui a été déshumidifié et/ou filtré par passage dans le volume V d'eau est chauffé par une unité de traitement thermique 5 avant son introduction dans la zone intérieure tampon 4. Dans cette installation, le système de récupération d'énergie 2 est facultatif.

Dans les variantes de réalisation illustrées sur les figures annexées, l'ouverture d'évacuation 120c du conduit d'injection 120 est positionnée au-dessus niveau de l'ouverture d'admission de liquide 10d de la partie inférieure immergée 10e de l'enceinte. Dans une autre variante, l'ouverture d'évacuation 120c du conduit d'injection 120 peut être positionnée au niveau ou au-dessous du niveau de l'ouverture d'admission de liquide 10d de la partie inférieure immergée 10e de l'enceinte 10.

Dans les variantes de réalisation illustrées sur les figures annexées, le niveau de liquide L dans l'enceinte 10 est le même dans le conduit d'injection 120 ou à l'extérieur du conduit d'injection 120. Dans une autre variante, il est possible de mettre en oeuvre une pompe hydraulique pour pomper du liquide dans la réserve 11 et pour introduire ce liquide pompée dans l'enceinte 10, à l'extérieur du conduit d'injection 120 de telle sorte que la profondeur d'immersion H1 du conduit d'injection 120 ( c'est-à-dire la hauteur H1 de liquide dans le conduit d'injection 120) est constamment inférieure à la hauteur H2 de liquide dans l'enceinte 10 et à l'extérieur du conduit d'injection 120. Dans ce cas l'ouverture d'évacuation 120c du conduit d'injection 120 peut être positionnée au même niveau ou au-dessous du niveau de l'ouverture d'admission de liquide 10d de la partie inférieure immergée 10e de l'enceinte 10.

Dans les variantes de réalisation illustrées sur les figures annexées, la réserve 11 est formée par un bac ouvert en partie supérieure. Dans une autre variante, le bac ou équivalent formant la réserve 11 peut être fermé.

## Revendications

1. Dispositif de production et de traitement d'un flux gazeux (F), ledit dispositif comportant une enceinte (10), d'une part dont la partie inférieure (10e) est plongée dans une réserve (11) de liquide (L) et comporte au moins une ouverture d'admission de liquide (10d), qui permet de faire communiquer la partie inférieure de l'enceinte avec la réserve de liquide, de telle sorte que la partie inférieure immergée (10e) de l'enceinte contient un volume (V) de ce liquide, et d'autre part qui comporte au moins une ouverture d'évacuation (10g) d'un flux gazeux, positionnée au-dessus de la surface (S) du volume liquide (V) contenu dans l'enceinte, le dispositif comportant en outre des moyens de production et d'injection d'un flux gazeux (F) comportant au moins un conduit d'injection (120), dont une partie inférieure (120a) est plongée dans le volume (V) de liquide contenu dans la partie inférieure immergée de l'enceinte, et se prolonge en partie supérieure à l'intérieur de l'enceinte (10) en dehors dudit volume (V) de liquide, ledit conduit d'injection (120) comportant, dans sa partie inférieure immergée, au moins une ouverture d'évacuation (120c) positionnée au-dessous de la surface (S) dudit volume (V) de liquide, lesdits moyens de production et d'injection d'un flux gazeux (F) permettent en fonctionnement de créer et d'introduire un flux gazeux (F) entrant, en provenance de l'extérieur de l'enceinte (10), dans la partie (120b) non immergée du conduit d'injection (120), de telle sorte que ledit flux gazeux (F) entrant passe à travers l'ouverture d'évacuation (120c) de la partie inférieure immergée du conduit d'injection (120), et est introduit dans ledit volume (V) de liquide contenu dans la partie inférieure immergée de l'enceinte, au-dessous de la surface (S) dudit volume (V) de liquide, et qu'un flux gazeux (F') sortant, traité par contact direct avec ledit volume de liquide (V), remonte à l'intérieur de l'enceinte (10) en dehors du conduit d'injection (120) et est évacué en dehors de ladite enceinte (10) en passant à travers l'ouverture d'évacuation (10g) de l'enceinte, **caractérisé en ce que** la profondeur d'immersion (H1) du conduit d'injection est comprise entre 20mm et 200mm, et **en ce que** lesdits moyens de production et d'injection d'un flux gazeux (F) permettent en fonctionnement de créer et d'introduire ledit flux gazeux (F) entrant, avec un débit d'au moins 1000m³/h et sans modifier la pression extérieure au-dessus du liquide (L) de la réserve (11) à l'extérieur de l'enceinte (10).

2. Dispositif selon la revendication 1, dans lequel les moyens de production et d'injection d'un flux gazeux (F) comportent un compresseur (121a) qui est raccordé à la partie (120b) non immergée du conduit d'injection (120) ou dans lequel les moyens de production et d'injection d'un flux gazeux (F) comportent un compresseur (121a) qui est raccordé à l'ouverture d'évacuation (10g) de l'enceinte (10).

3. Dispositif selon l'une quelconque des revendications précédentes, dans lequel la réserve (11) de liquide est ouverte en partie supérieure, et plus particulièrement comporte un bac ouvert en partie supérieure et/ou dans lequel la réserve (11) de liquide, à l'extérieur de l'enceinte (10), est à la pression atmosphérique, y compris pendant le fonctionnement des moyens de production et d'injection du flux gazeux (F) entrant.

4. Dispositif selon l'une quelconque des revendications précédentes dans lequel l'ouverture d'évacuation (120c) du conduit d'injection (120) est positionnée au même niveau que l'ouverture d'admission de liquide (10d) de la partie inférieure immergée (10e) de l'enceinte (10) ou au au-dessus du niveau de l'ouverture d'admission de liquide (10d) de la partie inférieure immergée (10e) de l'enceinte (10) et/ou dans lequel le conduit d'injection (120) permet d'introduire le flux gazeux (F) dans ledit volume (V) de liquide en le dirigeant vers le bas.

5. Dispositif selon l'une quelconque des revendications précédentes, dans lequel l'enceinte (10) comporte une ou plusieurs chicanes (14 ; 14' ; 14"), qui permettent de faire circuler le flux gazeux (F') sortant du volume (V) de liquide jusqu'à l'ouverture d'évacuation (10g), en lui faisant subir un ou plusieurs changements de direction, de manière à empêcher la projection de liquide par l'ouverture d'évacuation (10g).

6. Dispositif selon l'une quelconque des revendications précédentes, dans lequel la profondeur d'immersion (H1) du conduit d'injection est inférieure à la hauteur (H2) du volume (V) de liquide dans l'enceinte (10) en dehors du conduit d'injection (120) et/ou dans lequel la profondeur d'immersion (H1) du conduit d'injection est comprise entre 30mm et 50mm et/ou dans lequel la hauteur (H2) du volume (V) de liquide dans l'enceinte (10) en dehors du conduit d'injection (120) est inférieure à 500mm, et de préférence supérieure à 40mm.

7. Dispositif selon l'une quelconque des revendications précédentes, dans lequel les moyens de production et d'injection d'un flux gazeux permettent de créer et d'introduire ledit flux gazeux (F) entrant avec un débit d'au moins 10000m³/h et/ou dans lequel le ratio entre le débit du flux gazeux (F) entrant dans l'enceinte (10) et le volume (V) de liquide contenu dans l'enceinte (10) est supérieur à 10⁴ h⁻¹.

8. Dispositif selon l'une quelconque des revendications précédentes, dans lequel la température du liquide (T_{liquide} ) est inférieure à la température (Tᵢₙᵢₜᵢₐₗₑ) du flux gazeux (F) entrant dans l'enceinte (10) ou dans lequel la température (T_{liquide}) du liquide (L) est supérieure à la température (Tᵢₙᵢₜᵢₐₗₑ) du flux gazeux (F) entrant dans l'enceinte (10).

9. Dispositif selon l'une quelconque des revendications précédentes, dans lequel le liquide (L) est de l'eau et/ou dans lequel le liquide (L) est un liquide dont la température de solidification à la pression atmosphérique est inférieure à 0°C.

10. Installation permettant la récupération de calories dans un flux gazeux (F) entrant, ladite installation comportant le dispositif de l'une quelconque des revendications précédentes, dans lequel la température du liquide (T_{liquide} ) est inférieure à la température (Tᵢₙᵢₜᵢₐₗₑ) du flux gazeux (F) entrant dans l'enceinte (10), et un système (2 ; 2' ; 2") de récupération d'énergie permettant de récupérer une partie au moins des calories captées dans le liquide (L) de la réserve (11) dudit dispositif.

11. Installation selon la revendication 10, dans laquelle le système (2 ; 2") de récupération d'énergie comporte un circuit fermé (20) dans lequel circule un fluide caloporteur, et qui comprend un évaporateur (21 ou 26a) permettant un échange thermique avec le liquide (L) de la réserve (11), et de préférence dans laquelle l'évaporateur (21 ou 26a) est plongé dans le liquide (L) de la réserve (11) et/ ou dans laquelle le système de récupération d'énergie (2') comporte un circuit fermé dans lequel circule une partie du liquide (L) de la réserve à fonction de fluide caloporteur.

12. Installation comportant au moins deux installations amont (11) et aval (I2) de récupération de calories dans un flux gazeux (F) qui sont conformes à l'une quelconque des revendications 10 et 11, et qui sont montées en cascade, de telle sorte que le flux gazeux (F') sortant du dispositif de l'installation amont (11) est au moins en partie, et de préférence dans sa totalité, utilisé comme flux gazeux (F) entrant du dispositif de l'installation aval (I2).

13. Procédé de chauffage et/ou de refroidissement et/ou d'humidification et/ou de déshumidification d'un local, au moyen d'au moins un dispositif selon l'une quelconque des revendications 1 à 9, et qui est agencé de telle sorte que le flux gazeux (F) entrant qui est introduit dans l'enceinte (10) du dispositif est un flux d'air et le flux d'air (F') sortant du dispositif est introduit à l'intérieur du local, et de préférence dans lequel le flux d'air (F) entrant qui est introduit dans l'enceinte (10) provient au moins en partie de l'extérieur du local et/ou de préférence dans lequel le flux d'air (F) entrant qui est introduit dans l'enceinte (10) provient au moins en partie de l'intérieur du local.

14. Procédé de production d'un flux gazeux (F'), et notamment d'un flux d'air, à partir d'un flux gazeux (F) entrant, et notamment d'un flux d'air entrant, dans lequel on utilise une installation selon l'une quelconque des revendications 10 à 12, et on utilise pour le chauffage une partie au moins des calories captées dans la réserve (11) de liquide.

15. Procédé de récupération de calories dans l'air d'un local ou de déshumidification d'un local avec récupération de calories, au moyen d'une installation selon l'une quelconque des revendications 10 à 12, dans lequel le flux gazeux (F) entrant qui est introduit dans l'enceinte (10) du dispositif de l'installation est un flux d'air provenant au moins en partie de l'intérieur du local.

16. Procédé de création d'une zone tampon à l'intérieur d'un local dans laquelle l'humidité et/ou la teneur en poussières est contrôlée, **caractérisé en ce qu'**on utilise un dispositif selon l'une quelconque des revendication 1 à 9 qui est agencé de telle sorte que le flux de gaz (F') entrant dans l'enceinte (10) du dispositif est un flux d'air provenant au moins en partie de l'extérieur du local, et dans lequel le flux d'air (F') sortant de l'enceinte (10) du dispositif est introduit au moins en partie dans le local.

17. Procédé de filtrage et/ou dépollution d'un flux gazeux, et notamment d'un flux d'air, au moyen d'au moins un dispositif selon l'une quelconque des revendications 1 à 9, ou d'une installation selon l'une quelconque des revendications 10 à 12, de telle sorte qu'un flux gazeux (F) entrant contenant des particules et/ou des polluants est introduit dans l'enceinte (10) du dispositif et qu'une partie au moins de ces particules et/ou polluants est captée dans le liquide (L) de la réserve (11) du dispositif.

18. Procédé selon la revendication 17, dans lequel le flux gazeux (F) entrant contient des fumées industrielles, et notamment des fumées industrielles à haute température.

## Patentansprüche

1. Vorrichtung zur Erzeugung und Behandlung eines Gasstroms (F), wobei die Vorrichtung einerseits ein Gehäuse (10), bei dem ein Teil des unteren Abschnitts (10e) in einen Behälter (11) für Flüssigkeit (L) eingetaucht ist und mindestens eine Flüssigkeitseinlassöffnung (10d) aufweist, die es erlaubt, dass der untere Abschnitt des Gehäuses mit dem Flüssigkeitsbehälter in Verbindung steht, so dass der untere eingetauchte Abschnitt (10e) des Gehäuses ein Volumen (V) der Flüssigkeit enthält,
und andererseits mindestens eine Auslassöffnung (10g) eines Gasstroms aufweist, die sich oberhalb der Oberfläche (S) des in dem Gehäuse befindlichen Flüssigkeitsvolumens (V) befindet, wobei
die Vorrichtung weiterhin Mittel zur Erzeugung und Injektion eines Gasstroms (F) aufweist, die mindestens eine Injektionsleitung (120) umfassen, bei welcher ein unterer Abschnitt (120a) in das Volumen (V) der in dem unteren, eingetauchten Abschnitt des Gehäuses enthalten Flüssigkeit eingetaucht ist und sich teilweise in den oberen Abschnitt innerhalb des Gehäuses (10) und außerhalb des Flüssigkeitsvolumens (V) erstreckt, wobei die Injektionsleitung (120) in ihrem unteren, eingetauchten Abschnitt mindestens eine Auslassöffnung (120c) aufweist, die sich unterhalb der Oberfläche (S) des Flüssigkeitsvolumens (V) befindet, wobei die Mittel zur Erzeugung und Injektion eines Gasstroms (F) es im Betrieb erlauben, einen von außerhalb des Gehäuses (10) kommenden Gasstrom zu erzeugen und in den nicht eingetauchten Abschnitt (120b) der Injektionsleitung (120) derart einzuführen, dass der eintretende Gasstrom (F) durch die Auslassöffnung (120c) des unteren, eingetauchten Abschnitts der Injektionsleitung (120) strömt und in das Volumen (V) der in dem unteren, eingetauchten Abschnitt des Gehäuses enthaltenen Flüssigkeit eingeführt wird, unterhalb der Oberfläche (S) des Flüssigkeitsvolumens (V), und dass ein austretender Gasstrom (F'), der durch direkten Kontakt mit dem Flüssigkeitsvolumen (V) behandelt wurde, im Inneren des Gehäuses (10) außerhalb der Injektionsleitung (120) wieder aufsteigt und aus dem Gehäuse (10) unter Passieren der Auslassöffnung (10g) des Gehäuses abgeführt wird, **dadurch gekennzeichnet, dass**
die Eintauchtiefe (H1) der Injektionsleitung zwischen 20 mm und 200 mm liegt, und dass die Mittel zur Erzeugung und Injektion eines Gasstroms (F) es im Betrieb erlauben, den eintretenden Gasstrom (F) zu erzeugen und einzuleiten, mit einem Durchsatz von mindestens 1000m³/h und ohne den Außendruck über der Flüssigkeit (L) des Behälters (11) außerhalb des Gehäuses (10) zu ändern.

2. Vorrichtung nach Anspruch 1, wobei die Mittel zur Erzeugung und Injektion eines Gasstroms (F) einen Kompressor (121a) aufweisen, der mit dem nicht eingetauchten Abschnitt (120b) der Injektionsleitung (120) verbunden ist, oder die Mittel zur Erzeugung und Injektion eines Gasstroms (F) einen Kompressor (121a) aufweisen, der mit der Auslassöffnung (10g) des Gehäuses (10) verbunden ist.

3. Vorrichtung nach einem der vorhergehenden Ansprüche, wobei der Behälter (11) der Flüssigkeit im oberen Teil offen ist, und insbesondere eine im oberen Teil offene Wanne aufweist, und/oder wobei der Flüssigkeitsbehälter (11) außerhalb des Gehäuses (10) unter atmosphärischem Druck steht, einschließlich während des Betriebs der Mittel zur Erzeugung und Injektion des eintretenden Gasstroms.

4. Vorrichtung nach einem der vorhergehenden Ansprüche, wobei sich die Auslassöffnung (120c) der Injektionsleitung (120) auf gleicher Höhe wie die Flüssigkeitseinlassöffnung (10d) des unteren, eingetauchten Abschnitts (10e) des Gehäuses (10) oder oberhalb der Höhe der Flüssigkeitseinlassöffnung (10d) des unteren, eingetauchten Abschnitts (10e) des Gehäuses (10) befindet, und/oder wobei die Injektionsleitung (120) es erlaubt, den Gasstrom (F) in das Volumen (V) der Flüssigkeit nach unten gerichtet einzuführen.

5. Vorrichtung nach einem der vorhergehenden Ansprüche, wobei das Gehäuse (10) ein oder mehrere Ablenkelemente (14; 14'; 14") aufweist, die es erlauben, den aus dem Flüssigkeitsvolumen (V) austretenden Gasstrom (F') bis zu der Auslassöffnung (10g) zu zirkulieren, wobei dieser eine oder mehrere Richtungsänderungen erfährt, um ein Herausspritzen der Flüssigkeit aus der Auslassöffnung (10g) zu verhindern.

6. Vorrichtung nach einem der vorhergehenden Ansprüche, wobei die Eintauchtiefe (H1) der Injektionsleitung kleiner ist als die Höhe (H2) des Flüssigkeitsvolumens (V) in dem Gehäuse (10) außerhalb der Injektionsleitung (120) und/oder wobei die Eintauchtiefe (H1) der Injektionsleitung im Bereich zwischen 30 mm und 50 mm ist und/oder wobei die Höhe (H2) des Volumen (V) der Flüssigkeit in dem Gehäuse (10) außerhalb der Injektionsleitung (120) kleiner als 500mm und bevorzugt größer als 40 mm ist.

7. Vorrichtung nach einem der vorhergehenden Ansprüche, wobei die Mittel zur Erzeugung und Injektion eines Gasstroms (F) es erlauben, den eintretenden Gasstrom (F) mit einem Durchsatz von mindestens 10000m³/h zu erzeugen und einzuführen, und/oder wobei das Verhältnis zwischen dem Durchsatz des in das Gehäuse (10) eintretenden Gasstroms (F) und dem Volumen (V) der in dem Gehäuse (10) enthaltenen Flüssigkeit größer ist als 10⁴h⁻¹ ist.

8. Vorrichtung nach einem der vorhergehenden Ansprüche, wobei die Temperatur der Flüssigkeit (T_{liquide}) niedriger ist als die Temperatur (Tᵢₙᵢₜᵢₐₗₑ) des in das Gehäuse (10) eintretenden Gasstroms (F) oder wobei die Temperatur (T_{liquide}) der Flüssigkeit (L) höher ist als die Temperatur (Tᵢₙₜᵢₐₗₑ) des in das Gehäuse (10) eintretenden Gasstroms (F).

9. Vorrichtung nach einem der vorhergehenden Ansprüche, wobei die Flüssigkeit (L) Wasser ist und/oder wobei die Flüssigkeit (L) eine Flüssigkeit ist, deren Erstarrungstemperatur bei atmosphärischem Druck unter 0 °C liegt.

10. Anlage zur Rückgewinnung von Wärme in einem eintretenden Gasstrom (F), wobei die Anlage die Vorrichtung nach einem der vorhergehenden Ansprüche, wobei die Temperatur der Flüssigkeit (T_{liquide} ) niedriger als die Temperatur (Tᵢₙᵢₜᵢₐₗₑ) des in das Gehäuse (10) eintretenden Gasstroms (F) ist, und ein System (2; 2'; 2") zur Energierückgewinnung aufweist, das es erlaubt, zumindest einen Teil der in der Flüssigkeit (L) des Behälters (11) der Vorrichtung enthaltenen Energie zurückzugewinnen.

11. Anlage nach Anspruch 10, wobei das System (2; 2") zur Rückgewinnung von Energie einen geschlossenen Kreislauf (20) aufweist, in dem ein Wärmeträgerfluid zirkuliert, und der einen Verdampfer (21 oder 26a) umfasst, der einen Wärmeaustausch mit der Flüssigkeit (L) des Behälters (11) erlaubt, und wobei der Verdampfer (21 oder 26a) bevorzugt in die Flüssigkeit (L) des Behälters (11) eingetaucht ist und/oder wobei das System zur Energierückgewinnung (2') einen geschlossenen Kreislauf aufweist, in dem ein Teil der Flüssigkeit (L) des Behälters als Wärmeträgerfluid zirkuliert.

12. Anlage mit mindestens zwei stromaufwärts (11) und stromabwärts (I2) befindlichen Anlagen zur Rückgewinnung von Wärme in einem Gasstrom (F) entsprechend einem der Ansprüche 10 und 11, die derart nacheinander angeordnet sind, dass der aus der stromaufwärtigen Anlage austretende Gasstrom (F') zumindest teilweise, bevorzugt vollständig, als in die stromabwärtige Anlage (12) eintretender Gasstrom (F) verwendet wird.

13. Verfahren zum Heizen und/oder Kühlen und/oder Befeuchten und/oder Entfeuchten eines Raums mittels mindestens einer Vorrichtung nach einem der Ansprüche 1 bis 9, die so angeordnet ist, dass der eintretende Gasstrom (F), der in das Gehäuse (10) der Vorrichtung eingeleitet wird, ein Luftstrom ist, und der aus der Vorrichtung austretende Luftstrom (F') in den Raum eingeführt wird, und bevorzugt der eintretende Luftstrom (F), der in das Gehäuse (10) eingeleitet wird, zumindest teilweise von außerhalb des Raums kommt und/oder wobei bevorzugt der eintretende Luftstrom (F), der in das Gehäuse (10) eingeleitet wird, zumindest teilweise aus dem Inneren des Raums kommt.

14. Verfahren zum Erzeugen eines Gasstroms (F'), insbesondere eines Luftstroms, aus einem eintretenden Gasstrom (F), insbesondere aus einem eintretenden Luftstrom, wobei eine Anlage nach einem der Ansprüche 10 bis 12 verwendet wird, und man zumindest einen Teil der in dem Flüssigkeitsbehälter (11) enthaltenen Wärme zum Erwärmen verwendet.

15. Verfahren zur Rückgewinnung von Wärme aus der Luft eines Raumes, oder zur Entfeuchtung eines Raumes unter Rückgewinnung von Wärme, mittels einer Anlage nach einem der Ansprüche 10 bis 12, wobei der eintretende Gasstrom (F), der in das Gehäuse (10) der Vorrichtung der Anlage eingeleitet wird, ein Luftstrom ist, der zumindest teilweise aus dem Inneren des Raumes kommt.

16. Verfahren zur Bildung einer Pufferzone im Inneren eines Raumes, in dem die Feuchtigkeit und/oder der Staubgehalt gesteuert wird,
**dadurch gekennzeichnet, dass** eine Vorrichtung nach einem der Ansprüche 1 bis 9 verwendet wird, die so ausgelegt ist, dass der in das Gehäuse (10) der Vorrichtung eintretende Gasstrom (F`) ein Luftstrom ist, und wobei der aus dem Gehäuse (10) der Vorrichtung austretende Luststrom (F') zumindest teilweise in den Raum eingeführt wird.

17. Verfahren zum Filtern und/oder Reinigen eines Gasstroms, insbesondere eines Luftstroms, mittels mindestens einer Vorrichtung nach einem der Ansprüche 1 bis 9 oder einer Anlage nach einem der Ansprüche 10 bis 12, derart, dass ein Partikel und/oder Schadstoffe enthaltender eintretender Gasstrom in das Gehäuse (10) der Vorrichtung eingeführt wird, und dass zumindest ein Teil der Partikel und/oder Schadstoffe in der Flüssigkeit (L) des Behälters (11) der Vorrichtung eingefangen wird.

18. Verfahren nach Anspruch 17, wobei der eintretende Gasstrom (F) Industrieabgase, insbesondere Industrieabgase mit hoher Temperatur, enthält.

## Claims

1. A device for producing and treating a gas stream (F), said device including an enclosure (10), of which the lower part (10e) is submerged in a liquid (L) supply (11) and includes at least one liquid intake opening (10d), which makes it possible to place the lower part of the enclosure in communication with the liquid supply, such that the submerged lower part (10e) of the enclosure contains a volume (V) of this liquid, and on the one hand which includes at least one opening (10g) for discharging a gas stream, positioned above the surface (S) of the volume (V) of liquid contained in the enclosure, the device further including means for producing and injecting a gas stream (F) including at least one injection conduit (120), of which a lower part (120a) is submerged in the volume (V) of liquid contained in the submerged lower part of the enclosure, and extends in the upper part inside the enclosure (10) outside said volume (V) of liquid, said injection conduit (120) including, in its submerged lower part, at least one discharge opening (120c) positioned below the surface (S) of said volume (V) of liquid, said means for producing and injecting a gas stream (F) make it possible, during operation, to create and introduce an incoming gas stream (F), coming from outside the enclosure (10), in the non-submerged part (120b) of the injection conduit (120), such that said incoming gas stream (F) passes through the discharge opening (120c) of the submerged lower part of the injection conduit (120), and is introduced into said volume (V) of liquid contained in the submerged lower part of the enclosure, below the surface (S) of said volume (V) of liquid, and such that an outgoing gas stream (F'), treated by direct contact with said volume (V) of liquid, rises inside the enclosure (10) outside the injection conduit (120) and is discharged outside said enclosure (10), passing through the discharge opening (10g) of the enclosure **characterized in that** the submersion depth (H1) of the injection conduit is comprised between 20 mm and 200 mm and **in that** said means for producing and injecting a gas stream (F) make it possible, during operation, to create and introduce said incoming gas stream (F), with a flow rate of at least 1000m³/h and without modifying the outside pressure above the liquid (L) of the supply (11) outside the enclosure (10).

2. The device according to claim 1, wherein the means for producing and injecting a gas stream (F) include a compressor (121a) that is connected to the non-submerged part (120b) of the injection conduit (120) or wherein said means for producing and injecting a gas stream (F) include a compressor (121a) connected to the discharge opening (10g) of the enclosure (10) .

3. The device according to any one of the preceding claims, wherein the supply (11) of liquid is open at the upper part, and more particularly includes an open tub at the upper part and/or wherein the supply (11) of liquid, outside the enclosure (10), is at atmospheric pressure, including during the operation of the means for producing and injecting the incoming gas stream (F).

4. The device according to any one of the preceding claims, wherein the discharge opening (120c) of the injection conduit (120) is positioned at the same level as the liquid intake opening (10d) of the submerged lower part (10e) of the enclosure (10) or above the level of the liquid intake opening (10d) of the submerged lower part (10e) of the enclosure (10) and/or wherein the injection conduit (120) makes it possible to introduce the gas stream (F) into said volume (V) of liquid by steering it downward.

5. The device according to any one of the preceding claims, wherein the enclosure (10) includes one or several baffles (14; 14'; 14"), which make it possible to circulate the gas stream (F') leaving the volume (V) of liquid up to the discharge opening (10g), by having it undergo one or several changes of direction, so as to prevent liquid from being sprayed through the discharge opening (10g).

6. The device according to any one of the preceding claims, wherein the submersion depth (H1) of the injection conduit is smaller than the height (H2) of the volume (V) of liquid in the enclosure (10) outside the injection conduit (120) and/or wherein the submersion depth (H1) of the injection conduit is comprised between 30 mm and 50 mm and/or wherein the height (H2) of the volume (V) of liquid in the enclosure (10) outside the injection conduit (120) is smaller than 500 mm, and preferably greater than 40 mm.

7. The device according to any one of the preceding claims, wherein the means for producing and injecting a gas stream make it possible to create and introduce said incoming gas stream (F) with a flow rate of at least 10,000 m³/h, and/or wherein the ratio between the flow rate of the incoming gas stream (F) in the enclosure (10) and the volume (V) of liquid contained in the enclosure (10) is greater than 10⁴h⁻¹.

8. The device according to any one of the preceding claims, wherein the temperature of the liquid (T_{liquid}) is lower than the temperature (Tᵢₙᵢₜᵢₐₗ) of the gas stream (F) entering the enclosure (10) or wherein the temperature (T_{liquid}) of the liquid (L) is higher than the temperature (Tᵢₙᵢₜᵢₐₗ) of the incoming gas stream (F) entering the enclosure (10).

9. The device according to any one of the preceding claims, wherein the liquid (L) is water and/or wherein the liquid (L) is a liquid whose solidification temperature at atmospheric pressure is lower than 0°C.

10. A facility making it possible to recover calories in an incoming gas stream (F), said facility including the device set out in any one of the preceding claims wherein the temperature of the liquid (T_{liquid}) is lower than the temperature (Tᵢₙᵢₜᵢₐₗ) of the gas stream (F) entering the enclosure (10) and an energy recovery system (2; 2'; 2") making it possible to recover at least part of the calories captured in the liquid (L) from the supply (11) of said device.

11. The facility according to claim 10, wherein the energy recovery system (2; 2") includes a closed circuit (20) in which a heat transfer fluid circulates, and which comprises an evaporator (21 or 26a) allowing a heat exchange with the liquid (L) in the supply (11) and preferably wherein the evaporator (21 or 26a) is submerged in the liquid (L) of the supply (11) and/or wherein the energy recovery system (2') includes a closed circuit in which part of the liquid (L) from the supply serving as a heat transfer fluid circulates.

12. A facility including at least two upstream (11) and downstream (I2) facilities for recovering calories in a gas stream (F) that are according to any one of claims 10 and 11, and which are mounted in a cascade, such that the gas stream (F') leaving the device of the upstream facility (11) is at least partially, and preferably completely, used as incoming gas stream (F) of the device of the downstream facility (I2).

13. A method for heating and/or cooling and/or humidifying and/or dehumidifying a site, using at least one device according to in any one of claims 1 to 9, and which is arranged such that the incoming gas stream (F) that is introduced into the enclosure (10) of the device is an air stream, and the air stream (F') leaving the device is introduced inside the site and preferably wherein the incoming air stream (F) that is introduced into the enclosure (10) comes at least partially from outside the site and/or preferably wherein the incoming air stream (F) that is introduced in the enclosure (10) comes at least partially from inside the site.

14. A method for producing a gas stream (F'), and in particular an air stream, from an incoming gas stream (F), and in particular an incoming air stream, in which a facility according to any one of claims 10 to 12 is used, and for heating, at least part of the calories captured in the liquid supply (11) is used.

15. A method for recovering calories in the air of a site or dehumidifying a site with calorie recovery, using a facility according to any one of claims 10 to 12, in which the incoming gas stream (F) that is introduced into the enclosure (10) of the device of the facility is an air stream coming at least partially from the inside of the site.

16. A method for creating a buffer zone inside the site in which the humidity and/or dust content is controlled, **characterized in that** a device according to any one of claims 1 to 9 is used that is arranged such that the incoming gas stream (F') in the enclosure (10) of the device is an air stream coming at least partially from outside the site, and wherein the air stream (F') leaving the enclosure (10) of the device is introduced at least partially into the site.

17. A method for filtering and/or cleaning up a gas stream, and in particular an air stream, using at least one device according to any one of claims 1 to 9, or a facility according to any one of claims 10 to 12, such that an incoming gas stream (F) containing particles and/or pollutants is introduced into the enclosure (10) of the device and at least part of these particles and/or pollutants are captured in the liquid (L) of the supply (11) of the device.

18. The method according to claim 17, wherein the incoming gas flow (F) contains industrial fumes, and in particular high-temperature industrial fumes.
